# EUROPÄISCHE PATENTSCHRIFT

(11) **EP 3 704 442 B1**
(45) Veröffentlichungstag und Bekanntmachung des Hinweises auf die Patenterteilung: **12.01.2022**
(21) Anmeldenummer: 18807858.8
(22) Anmeldetag: 05.11.2018
(51) Int. Cl.: G01B 11/27, G01B 11/02, G01B 11/06, G01B 11/245, G01N 21/3581, G01N 21/952, G01N 21/954, G01B 11/16

(54) **TERAHERTZ-MESSVERFAHREN UND TERAHERTZ-MESSVORRICHTUNG ZUR VERMESSUNG VON ROHREN**
TERAHERTZ MEASURING METHOD AND TERAHERTZ MEASURING DEVICE FOR MEASURING PIPES
PROCÉDÉ DE MESURE EN TÉRAHERTZ ET DISPOSITIF DE MESURE EN TÉRAHERTZ POUR LE MESURAGE DE TUYAUX

(30) Priorität: 03.11.2017 DE 102017125740
(43) Veröffentlichungstag der Anmeldung: 09.09.2020
(73) Patentinhaber: iNOEX GmbH Innovationen und Ausrüstungen für die Extrusionstechnik, 49324 Melle (DE)
(72) Erfinder: NEUMEISTER, Arno, 32457 Porta Westfalica (DE)
(74) Vertreter: Bremer, Ulrich
(86) Internationale Anmeldenummer: PCT/DE2018/100896
(87) Internationale Veröffentlichungsnummer: WO 2019/086081

(56) Entgegenhaltungen:
- DE-A1- 19 852 335
- DE-A1-102016 105 599
- US-A1- 2009 314 944
- US-A1- 2016 305 869

## Beschreibung

Die Erfindung betrifft ein Terahertz-Messverfahren und eine Terahertz-Messvorrichtung zur Vermessung von Messobjekten, insbesondere aus einem Kunststoffmaterial.

Terahertz-Messverfahren werden u. a. eingesetzt, um nach ihrer Herstellung entlang einer Förderrichtung geförderte Messobjekte, insbesondere aus Kunststoff, zu vermessen. Die Messobjekte können z.B. extrudiert sein, z.B. Rohre, oder z.B. auch Folien; sie werden zur Vermessung durch die Messvorrichtung geführt und dort z.B. auf Schichtdicken bzw. Abstände oder auch auf Fehlstellen, z.B. Lunker, untersucht.

So ist im Allgemeinen ein THz-Sensor außerhalb des geförderten Rohres angeordnet und senkrecht auf die Rohrachse gerichtet. Die entlang der optischen Achse eingestrahlte THz-Strahlung wird an den Grenzflächen des Rohres teilweise reflektiert, so dass sie bei senkrechtem Einfall entlang der optischen Achse zurück reflektiert wird und in der aufgenommenen Signalamplitude als Reflexionspeak detektiert werden kann. Bei der Vermessung eines z. B. einschichtigen Kunststoff-Rohres wird die THz-Strahlung somit zunächst an einer Außenfläche, dann an einer Innenfläche teilweise reflektiert. Weiterhin kann die THz-Strahlung nach Durchqueren des Rohrinnenraums wiederum an einer Innenfläche beim Eintritt in das Kunststoffmaterial und nachfolgend an der Außenfläche reflektiert werden. Die Schichtdicken können als Laufzeitmessungen der THz-Strahlung ermittelt werden, z.B. direkt als Messung über die Zeit oder bei Frequenzmodulation auch als Messung über die Frequenz. Somit können bei der Extrusion eines Rohres die Wanddicke und der Innendurchmesser auf vorschriftsmäßige Werte überprüft werden. Bei Einsatz eines einzigen Sensors kann dieser fortlaufend um das Messobjekt herum geschwenkt werden, z. B. mit 30 Umdrehungen pro Minute, so dass ein Rohr nach seiner Extrusion direkt vollumfänglich vermessen werden kann.

Die WO 2016/139155 A1 schlägt hierzu vor, mehrere Paare aus Sendern und Empfängern um des Messobjekt herum rotieren zu lassen und die Terahertz-Strahlung auf die Längsachse des Messobjektes, d.h. z.B. die Rohrachse, zu fokussieren, um Änderungen der Wanddicke und ein Sagging zu ermitteln. Auch derartige Messungen sind aber ungenau, da für Grenzflächen, die nicht senkrecht zur einfallenden Strahlung verlaufen, im Allgemeinen keine Reflexionspeaks ermittelt werden können.

Weiterhin sind Ultraschall-Messverfahren bekannt, um Fehlstellen bzw. Lunker in dem Material durch Reflexionspeaks im Mess-Signal zu detektieren.

Die US 9,791,321 B2 zeigt einen THz-Transceiver mit multi-pixel array, der insbesondere einteilig auf einem Substrat mit mehreren Schichten ausgebildet wird.

Die DE 198 52 335 A1 zeigt eine Einrichtung zur Fehlererfassung und/oder Wanddickenmessung bei durchlaufenden Bändern, Profilen oder Rohren aus Kunststoff mit Ultraschallsignalen. Dafür sind über die Breite des Bandes oder Profils beziehungsweise den Umfang des Rohres verteilt mehrere Ultraschallmessköpfe mit Sendern und Empfängern verteilt angeordnet. Das von einem Sender eines Ultraschallmesskopfes ausgesandte und ohne Streuung reflektierte Signal wird vom Empfänger dieses Ultraschallmesskopfes empfangen, Durch die Einbeziehung der gestreuten, reflektierten Signale in die Messung wird die Messfläche pro Messung vergrößert

Die DE 10 2016 105 599 A1 zeigt eine Terahertz- Messvorrichtung zum Vermessen eines Prüfobjektes mit einer THz-Sende- und Empfangseinheit zum Aussenden von Terahertz-Strahlung in einem Abstrahl-Raumwinkel entlang einer optischen Achse, Empfangen reflektierter Terahertz-Strahlung und Erzeugen einer Signalamplitude als Funktion der Zeit oder Frequenz, wobei eine Steuer- und Auswerteeinrichtung aus der Signalamplitude Fehlstellen des Prüfobjektes ermittelt. Hierbei wird ein Kernbereich der ausgesandten Terahertz-Strahlung ausgeblendet.

Die US2009314944A1 zeigt ein Terahertz-Messsystem zur Untersuchung einer Vielzahl von Proben mit verschiedenen Positionen oder Orientierungen, die sich relativ zu dem System bewegen, wobei die Terahertz-Strahlung über mehrere gekrümmte Spiegel geleitet wird.

Aus der US2016305869A1 ist ein Messsystem bekannt, das inkohärente Strahlung zur Untersuchung eines mit einer Schutzschicht oder einer äußeren Schicht, z.B. Farbe oder einer Isolierung, bedeckten Metallsubstrates verwendet.

Der Erfindung liegt die Aufgabe zugrunde, ein THz-Messverfahren und eine THz-Messvorrichtung zum Vermessen von Messobjekten, insbesondere extrudierten Rohren zu schaffen, die mit relativ geringem Aufwand genaue Messungen auch nicht-idealer Effekte ermöglicht.

Diese Aufgabe wird durch ein THz-Messverfahren und eine THz-Messvorrichtung nach den unabhängigen Ansprüchen gelöst. Die Unteransprüche beschreiben bevorzugte Weiterbildungen. Weiterhin ist eine Messanordnung aus der THz-Messvorrichtung und dem Messobjekt vorgesehen.

Das erfindungsgemäße THz-Messverfahren kann insbesondere mit einer erfindungsgemäßen THz-Messvorrichtung durchgeführt werden. Die erfindungsgemäße THz-Messvorrichtung ist insbesondere auch zur Durchführung eines erfindungsgemäßen THz-Messverfahrens geeignet und vorgesehen.

Somit erfolgt zum einen - in herkömmlicher Weise - eine Vermessung des Messobjektes mittels eines Haupt-Sensors in einer Detektionsebene, wobei ein Abstand, z.B. eine Schichtdicke ermittelt wird, indem ein THz-Hauptstrahl entlang einer Hauptachse ausgesandt wird. Weiterhin erfolgt eine Messung entlang einer Zusatzachse, die nicht in der Detektionsebene und zu dieser geneigt verläuft, insbesondere entlang der Symmetrieachse oder Förderrichtung verstellt bzw. geneigt. Die Zusatzachse kann insbesondere entlang der Symmetrieachse geneigt sein, d.h. in oder entgegen der Förderrichtung. Indem die Zusatzachse entgegen der Förderrichtung geneigt ist, können Materialbereich des geförderten Messobjektes erfasst werden, die erst noch in die Detektionsebene gelangen.

Die Symmetrieachse ist insbesondere die Symmetrieachse der THz-Messvorrichtung und/oder des Messobjektes, und fällt insbesondere mit der Förderrichtung zusammen.

Eine derartige Vermessung von Materialbereichen außerhalb und geneigt bzw. schräg zu der Detektionsebene wird bei den Messobjekten im Allgemeinen zu keinen Reflexionspeaks führen, da ihre Grenzflächen parallel zu der Förderrichtung verlaufen, d.h. bei einem Rohr z. B. parallel zur Rohrachse. Hierdurch können jedoch Fehlstellen im oder am Messobjekt detektiert werden, die den schräg einfallenden Zusatz-Strahl reflektieren.

Dies ist insbesondere auch bei anisotropen Fehlstellen wie z.B. Metallsplittern hilfreich, die den einfallenden Strahl ungleichmäßig reflektieren können und eventuell in der Detektionsebene nicht erfasst werden. Sie können gegebenenfalls durch den Zusatzstrahl besser erfasst werden. Somit kann die Wahrscheinlichkeit und Qualität der Erfassung von Fehlstellen deutlich gesteigert werden.

Indem mehrere Zusatzsensoren mit unterschiedlichen Neigungen ihrer Zusatzachse angeordnet sind, können Fehlstellen bereits sicher im Voraus detektiert werden. Durch z. B. eine Laufzeitmessung und dem bekannten Neigungswinkel kann die Steuer- und Auswerteeinrichtung die Positionen de Fehlstellen ermitteln und in den verschiedenen Messsignalen vergleichen.

Gemäß einer bevorzugten Ausbildung ist weiterhin mindestens ein Zusatz-sensor mit seiner optischen Zusatz-Achse in der Detektionsebene und zu der ersten optischen Haupt-Achse des Haupt-Sensors geneigt ausgerichtet. Hierdurch können zum einen Fehlstellen in der Detektionsebene ermittelt werden, da ein nicht senkrechter Einfall der optischen Zusatz-Achse gegenüber den Grenzflächen dazu führt, dass Signale von Fehlstellen besonders gut detektiert werden können. Somit können Fehlstellen in der Detektionsebene bei Umkreisen eines Messkopfs gegebenenfalls mit mehreren Sensoren erfasst werden.

Zum anderen kann bei einem Rohr eine Fehlformung der Innenfläche auftreten, die z. B. ein Sagging, d.h. Absacken des extrudierten Rohres nach unten, eine Exzentrizität, d.h. Fehlpositionierung der Symmetrieachse der Innenfläche gegenüber der Symmetrieachse der Außenfläche, oder eine Ovalität sein kann. Erfindungsgemäß können allgemein Ausbildungen der Innenfläche, die von einer konzentrisch runden Anordnung abweichen, in der Detektionsebene mittels des Haupt-Sensors und des weiteren Zusatz-Sensors mit in der Detektionsebene verlaufenden und gegenüber der Hauptachse um einen Ebenen-Sensorwinkel versetzten Zusatz-Achse erkannt werden. Derartige Fehlformungen können hierbei im begrenztem Maß zulässig sein, anders als Fehlstellen. Hierbei steht der THz-Haupt-Sensor, der mit seiner ersten optischen Achse auf die Symmetrieachse des Messobjektes gerichtet ist, nicht mehr senkrecht auf der fehlgeformten Fläche wie z. B. einer Sagging-Fläche, so dass die THZ-Strahlung nicht senkrecht reflektiert wird und der THz-Haupt-Sensor kein Reflexionssignal detektiert.

Der Zusatzsensor wird im Allgemeinen keine ordnungsgemäßen Reflexionen an den Grenzflächen detektieren. Der Zusatzsensor wird daher in seinen meisten Stellungen kein Reflexionssignal liefern; beim Umkreisen um das Messobjekt wird der Zusatzsensor jedoch aufgrund der Schrägstellung bzw. Fehlausrichtung seiner optischen Zusatz-Achse in der Detektionsebene in zumindest einer Stellung einen Reflexionspeak an einer fehlgeformten Fläche wie z. B. einer Sagging-Fläche ermitteln, da diese im unteren Bereich des Rohres, einen abgeflachten, aber stetigen Verlauf aufweist. Der vorzugsweise mit dem Haupt-Sensor umlaufende Zusatz-Sensor wird somit in zumindest einer Messposition mit seiner optischen Zusatz-Achse hinreichend senkrecht auf der fehlgeformten Fläche stehen, so dass ein Reflexionspeak detektiert werden kann.

Insbesondere kann auch der in Längsrichtung geneigt ausgerichtete ZusatzSensor zur Bewertung einer fehlgeformten Innenfläche wie z.B. einem Sagging dienen, da derartige Fehlformungen- anders als Fehlstellen - im Allgemeinen über größere Längserstreckungen (entlang der Rohrachse) ausgebildet sind. Fehlformungen wie z. B. ein Sagging können somit durch einen Vergleich mehrerer Ebenen erkannt und von Fehlstellen unterschieden werden. Somit kann eine für den Haupt-Sensor und den einen oder die mehreren Zusatz-Sensoren vorgesehene gemeinsame Steuer- und Auswerteeinrichtung erkennen, dass hier ein oder mehrere zusätzliche, nicht ordnungsgemäße Reflexionspeak(s) vorliegen, der oder die direkt einer Fehlformung wie z.B. einer Sagging-Fläche zugeordnet werden können. Vorteilhafterweise kann die Steuer- und Auswerteeinrichtung hierbei die Signale des Haupt-Sensors und des Zusatzsensors vergleichen und z.B. beim Haupt-Sensor das Fehlen eines Reflexionspeaks der unteren Innenfläche erkennen.

Somit kann auch z.B. ein grundsätzlich zulässiges Sagging erkannt werden, das insbesondere bei geringen Wanddicke-Veränderungen, insbesondere wenn die Mindest-Wandstärken eingehalten werden, zulässig ist.

Der Haupt-Sensor und der eine oder die mehreren Zusatzsensoren sind starr zueinander und vorzugsweise mit festem Sensorwinkel (Winkelversatz) zueinander angeordnet. Hierbei ist eine Ausbildung mit mehreren Zusatz-Sensoren als Array bzw. ein- oder auch zweidimensionale Anordnung von Sensoren vorgesehen, die ein divergentes Bündel von THz-Strahlen aussenden. So kann z. B. eine THz-Array-Anordnung vorgesehen sein, bei der die divergente Anordnung der optischen Achsen durch eine z. B. konvexe Anordnung der Sensor-Chips erreicht wird. Die Messvorrichtung gibt somit ein divergentes Bündel von THz-Strahlen aus, von denen ein Strahl als Hauptstrahl die ordnungsgemäße Vermessung ermöglicht, und der eine oder die mehreren aus der Detektionsebene geneigt heraus gerichteten Zusatzsensoren Fehlstellen detektieren und neben dem Haupt-Sensor angeordnete Zusatzsensoren Fehlstellen und Fehlformungen der Innenfläche detektieren.

Somit kann insbesondere ein zweidimensionales Array mit einem divergenten Bündel von THz-Strahlen ausgebildet werden, bei dem insbesondere die optischen Achsen von der Mitte ausgehend nach außen immer mehr divergieren, d.h. z.B. zu allen vier Seiten hin mit zunehmenden, insbesondere stetig zunehmenden Winkel gegenüber dem mittleren Sensor, der insbesondere der THz-Hauptsensor ist.

Eine derartige Anordnung aus THZ-Hauptsensor und mehreren THz-Zusatzsensor, auch ein zweidimensionales Array mit nicht-parallelen, insbesondere divergierenden Achsen, unterscheidet sich insbesondere auch von der eingangs genannten US 9,791,321 B2, bei der ein Sensor mehrere Pixel aufweist, deren Achsen somit alle dicht nebeneinander liegen und z.B. bei einer bildgebenden Optik, z.B. bei THz-Scannern an Flughäfen u.a., eine Bilddarstellung ermöglichen.

Bei der divergenten Anordnung von mehreren optischen Achsen ist vorzugsweise um jede optische Achse ein Abstrahlkegel ausgebildet, wobei sich die Abstrahlkegel insbesondere nicht überlappen, um somit insgesamt einen großen Bereich abzudecken und dennoch eindeutige Messsignale zu liefern. Somit kann vorzugsweise eine hohe Auflösung bei großer Flächenabdeckung erreicht werden. Eine derartige Ausbildung unterscheidet sich insbesondere auch von einem einzigen breiten Abstrahlkegel, bei dem eine Reflexionspeak nicht genauer einem kleinen Winkelbereich zugeordnet werden kann.

Grundsätzlich können auch divergente Anordnung ausgebildet werden, bei denen sich in einem Nahbereich die Achsen überkreuzen, solange in einem Bereich weiter außerhalb, in dem das Messobjekt vermessen werden soll, dann die divergente Anordnungen der Achsen auftritt. Vorteilhaft ist aber eine Ausbildung mit von dem zweidimensionalen Array divergent ausgehenden optischen Achsen der einzelnen THz-Sensoren, d.h. THz-Hauptsensor und THz-Zusatzsensoren.

Die Steuer- und Auswerteeinrichtung kann Abstandsmessungen durchführen, z.B. aus Laufzeitmessungen bzw. bei Frequenzmodulation aus Messungen im Frequenzraum. Somit können durch den Haupt-Sensor ordnungsgemäße Wanddicken ermittelt werden und es kann erkannt werden, wenn der Reflexionspeak der Innenfläche in einigen Bereichen fehlt. Hierbei können Reflexionspeaks der Innen- und Außenfläche durch die Abstände und auch aufgrund der Peakform unterschieden werden, da Übergänge von einem optisch dünnen Medium (Luft) in ein dickes Medium (z.B. Kunststoff) andere Peakformen als umgekehrte Übergänge aufweisen.

Gemäß einer weiteren Ausbildung ist eine Aktiv-Passiv-Messung möglich, bei der ein Sensor aktiv THz-Strahlung sendet und die anderen Sensoren passiv empfangen, wobei vorzugsweise ein Synchronisationssignal zwischen der aktiven und den passiven Sensoren ausgegeben wird, das somit eine Laufzeitberechnung durch Synchronisation des Aussendezeitpunktes mit den Empfangszeitpunkten ermöglicht.

Hierdurch wird der Vorteil erreicht, dass mit geringem apparativem Aufwand und relativ geringem Energieaufwand eine breitflächige Vermessung des Prüfobjektes ermöglicht wird, insbesondere auch mit geringer oder gar keiner mechanischen Verstellung der Einheiten. Es sind Messungen mit nicht-senkrechtem Einfall der THz-Strahlung an den Grenzflächen möglich, die große Bereiche des Prüfobjektes erfassen können.

Vorteilhafterweise zieht die passive Terahertz-Empfangseinheit bzw. die Auswerteeinheit zur Auswertung ergänzend gespeicherte Daten über eine geometrische Ausbildung, insbesondere relative geometrische Anordnungen der Position und Ausrichtung ihrer optischen Achse sowie der Position und Ausrichtung der optischen Achse der Terahertz-Sende- und Empfangseinheit hinzu. Derartige geometrische Daten können vorab durch Messung, insbesondere aber auch durch eine Kalibrierung an einem ersten Messobjekt festgelegt werden, sodass sie nachfolgend zur Auswertung herangezogen werden können.

Das Synchronisierungssignal zur Festlegung des Sendezeitpunktes, z. B. ein Triggerimpuls oder ein analoges Signal, z. B. Sägezahn-Signal, wird über eine Datenverbindung ausgegeben; es kann insbesondere direkt von der sendenden Terahertz-Sende- und Empfangseinheit ausgegeben werden, die somit insbesondere auch eine Master-Einheit darstellen kann, die das Synchronisierungssignal mit der Information über den Aussendezeitpunkt an die mindestens eine als Slave-Einheit dienende THz-Empfangseinheit ausgibt. Hierdurch ist insbesondere auch die Ausbildung eines modularen Systems, z. B. Bus-Systems, aus miteinander in Datenverbindung stehenden Einheiten möglich, das gegebenenfalls erweitert und stellenweist ausgetauscht werden kann. Alternativ hierzu ist auch ein zentrales System, z. B. sternförmig mit zentraler Steuereinheit, möglich. Die Datenverbindung kann über ein Kabel der auch drahtlos erfolgen.

Gemäß einer bevorzugten Ausbildung kann bei der Vielzahl mehrerer Einheiten jede Einheit zeitweise Terahertz-Sende- und Empfangseinheit sein, und somit zum Beispiel als Master-Einheit den Sendezeitpunkt für die anderen Einheiten festlegen, die jeweils passive Empfangseinheiten sind. So kann die Funktion der Master-Einheit bzw. sendenden Einheit jeweils durch wechseln. Hierdurch wird ein Vorteil einer sehr großflächigen Vermessung bei geringem Aufwand ermöglicht, da unterschiedliche Positionen und Ausrichtungen der sendenden optischen Achse bei jeweils mehreren ergänzend detektierenden optischen Achsen ermöglicht wird.

Somit sind mit geringem Aufwand breitflächige, insbesondere auch vollumfängliche Vermessungen möglich. Es kann ein breiter Aussendekegel der sendenden Einheit und breiter Empfangskegel der empfangenden Einheit genutzt werden, anders als bei nur direkte senkrechte Reflexionen detektierenden Systemen.

Die Messanordnung weist die THz-Messvorrichtung mitsamt dem vermessenen Messobjekt auf, vorzugsweise auch mit einer Fördereinrichtung zum Fördern des Messobjektes in die Förderrichtung.

Die THz-Strahlung wird insbesondere im Frequenzbereich von 10 GHz bis 50 THz ausgegeben, wobei sie vollelektronisch oder auch optisch ausgegeben werden kann. Die Vermessung kann insbesondere direkt nach der Extrusion des Messobjektes erfolgen, wobei dann vorzugsweise die Verstellgeschwindigkeit bzw. Umlaufgeschwindigkeit der Sensoren um das Messobjekt größer ist als die Fördergeschwindigkeit des Messobjektes.

Vorteilhafterweise verläuft die erste und/oder zweite optische Achse durch die Symmetrieachse des Messobjektes und/oder der THz-Messvorrichtung, wobei die Symmetrieachse insbesondere entlang der Förderrichtung verläuft, insbesondere bei einem rohrförmigen Messobjekt.

Alternativ hierzu ist das Messobjekt plan, wobei die Detektionsebene und die erste optische Achse senkrecht auf dem Messobjekt stehen .

Vorteilhafterweise sind bei der Ausbildung, bei der das THz-Sensor-Array eine zweidimensionalen Anordnung aus THz-Sensoren ausbildet, z.B. auf einer konvexen und/oder nicht-planen Arrayfläche und/oder mit zueinander gekippten optischen Achsen, in der zweidimensionalen Anordnung die THz-Sensoren in Umfangsrichtung nebeneinander und in Förderrichtung und/oder Richtung der Symmetrieachse hintereinander angeordnet.

Die Erfindung wird im Folgenden anhand der beiliegenden Zeichnungen an einigen Ausführungsformen näher erläutert. Es zeigen:
- Fig. 1: eine THz-Messvorrichtung gemäß einer Ausführungsform an einem Rohr mit Sagging im Radialschnitt bzw. Querschnitt, in einer ersten Messposition;
- Fig. 2: eine Seitenansicht zu Fig. 1;
- Fig. 3: eine der Fig. 1 entsprechende erste Messposition an einem weiteren Rohr mit Sagging, sowie Darstellungen des THz-Sensor-Arrays;
- Fig. 4: die Messvorrichtung aus Fig. 3 in einer weiteren Messposition;

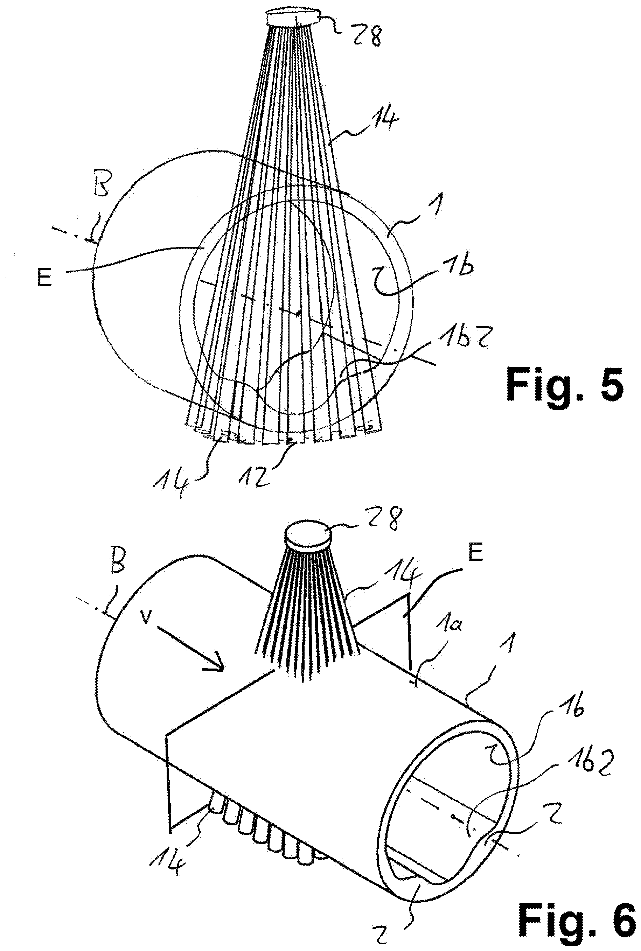

- Fig. 5: eine perspektivische, geschnittene Ansicht der Ausbildung von Fig. 1 und 2;
- Fig. 6: eine der Fig. 4 entsprechende perspektivische Darstellung ohne Schnitt durch die Detektionsebene;
- Fig. 7, 8: Block-Darstellungen der mehreren Sensoren bei einer Aktiv-Passiv-Messung gemäß zweier Ausführungsformen;
- Fig. 9-12: eine Ausführungsform einer Messvorrichtung mit mehreren, um das Messobjekt herum angeordneten, gekoppelten THz-Sensor-Arrays, und
- Fig. 13: eine Vermessung eines planen Messobjektes.

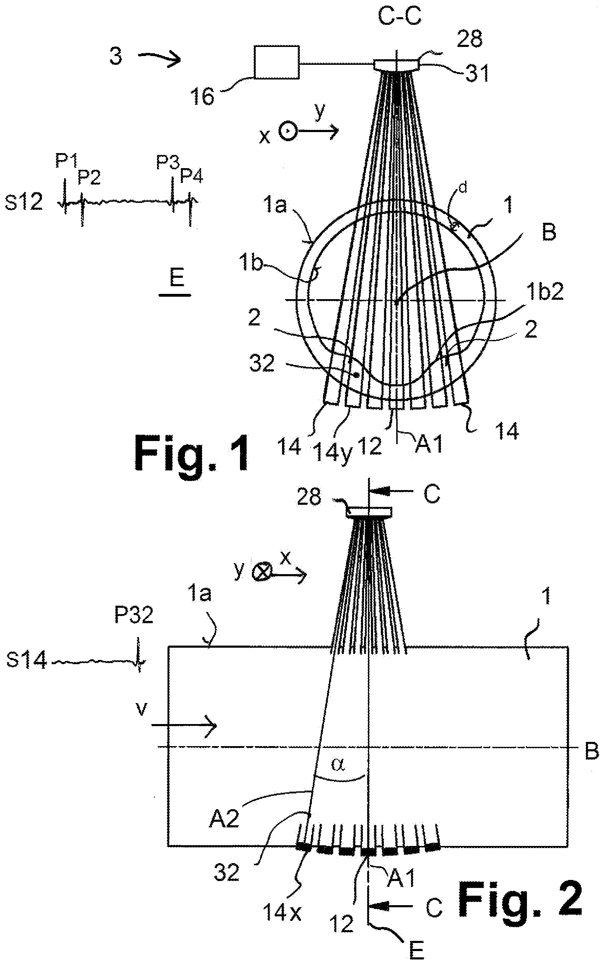

Fig. 1 zeigt als Messobjekt 1 ein Rohr mit einer Außenfläche 1a und einer Innenfläche 1b, das z.B. nach seiner Extrusion in einer Förderrichtung v gefördert wird. Eine Wanddicke d verläuft über den Umfang nicht einheitlich, da das Rohr 1 in seiner unteren Hälfte einen Sagging-Bereich 2 mit größerer Wanddicke aufweist. Hierbei ist die Außenfläche 1a rund, jedoch die Innenfläche 1b in dem Sagging-Bereich 2 nicht rund. Ein derartiges Sagging tritt bei der Extrusion von Kunststoff-Rohren auf, wenn das flüssige Material sich stärker in dem unteren Bereich sammelt.

Weiterhin liegen in dem Rohr 1 Fehlstellen 32 vor, z.B. Lunker bzw. Lufteinschlüsse oder auch andere Einschlüsse, z.B. von verbranntem Material oder auch z.B. Metallsplitter.

Gemäß Fig. 1 ist außerhalb des Rohres 1 eine THz-Messvorrichtung 3 vorgesehen, die einen Messkopf aufweist, der hier als THz- Sensor-Array 28 ausgebildet ist und mehrere THz-Sensoren 30-i und 30-8 aufweist, wobei die THz-Sensoren als THz-Transceiver ausgebildet sind. Hierbei wird nachfolgend das THz- Sensor-Array 28 als spezielle Ausbildung eines Messkopfes genauer beschrieben.

Das THz- Sensor-Array 28 ist als Array bzw. Anordnung einzelner THz-Sensoren 30-8, 30-i auf einem Träger 31 ausgebildet, wobei der Träger 31 z.B. konvex ausgebildet ist. Vorzugsweise sind die THz-Sensoren 30-8, 30-i in einem zweidimensionalen Array, d.h. z.B. einem xy-Koordinatensystem angeordnet. Die optischen Achsen A1, A2, A3 der einzelnen THz-Sensoren 30-8, 30-i divergieren. Eine Steuer- und Auswerteeinrichtung 16 kann wie in Fig. 1 angedeutet separat zu dem THz- Sensor-Array (Messkopf) 28 oderwie in den anderen Ausführungsformen gezeigt - auch vorzugsweise in dem THz- Sensor-Array (Messkopf) 28 integriert sein.

Ein mittlerer THz-Sensor ist als Haupt-Sensor 30-8 mittig (in radialer Richtung) mit seiner ersten optischen Achse A1 auf die Rohrachse B und somit senkrecht zu der Außenfläche 1a und Innenfläche 1b ausgerichtet, hingegen sind die weiteren THz-Sensoren demgegenüber divergent als ZusatzSensoren 30-i vorgesehen. Der THz-Sensor-Array 28 rotiert wiederum um das Rohr 1 und misst mit seinen einzelnen THz-Sensoren 30-8, 30-i jeweils Abstände, indem er THz-Strahlung aussendet, reflektierte THz-Strahlung detektiert und Laufzeitmessungen durchführt.

Hierbei divergieren die optischen Achsen A2 einiger der Zusatz-Sensoren 30-i in Längsrichtung, d.h. in Richtung der Rohrachse B (Symmetrieachse) bzw. in Förderrichtung v des Rohres 1, wie z.B. aus Fig. 2 ersichtlich ist. Weiterhin divergieren die optischen Achsen A3 einiger der Zusatz-Sensoren 30-i gemäß der gezeigten Ausführungsform vorzugsweise auch in einer Detektionsebene E senkrecht zur Symmetrieachse B (und Förderrichtung v), wie aus Fig. 1, 3 und 4 d.h. den Schnitten, die in der Detektionsebene E liegen, ersichtlich ist.

Hierbei werden die die optischen Achsen A2, die außerhalb der Detektionsebene liegen bzw. zu dieser geneigt sind, als zweite optische Achsen A2 bezeichnet, die gegenüber der Detektionsebene E einen Neigungswinkel α aufweisen,
und die optischen Achsen A3, die in der Detektionsebene E liegen, als dritte optische Achsen A3 bezeichnet, die gegenüber der ersten optischen Achse A1 in der Detektionsebene E einen Ebenen-Sensorwinkel β aufweisen.

Der THz-Haupt-Sensor 30-8, dessen erste optische Achse A1 durch die Rohrachse B verläuft, vermisst somit in üblicher Weise die Wanddicke d, wobei die vom THz- Haupt-Sensor 30-8 ausgegebene THz-Haupt-Strahlung 12 beim Übergang von Medien mit unterschiedlichem Brechnungsindex teilweise reflektiert wird; somit erscheint in der oberen Stellung der Fig. 1 eine ordnungsgemäße Signalamplitude S12 des mittleren THz- Haupt-Sensors 30-8 mit einem ersten Signalpeak P1 entsprechend dem Übergang der THz-Haupt-Strahlung 12 von Luft in die Außenfläche 1a, d. h. in das optisch dichtere Material des Rohres 1. Nachfolgend tritt ein Signalpeak P2 beim Übergang von dem Material durch die Innenfläche 1a in die Luft oder das Gas im Innenraum des Rohres 1 auf, und nach Durchqueren des Innenraums des Rohres 1 treten entsprechend wiederum Signalpeaks P3 und P4 beim senkrechten Durchstoßen des hinteren Wandbereichs auf.

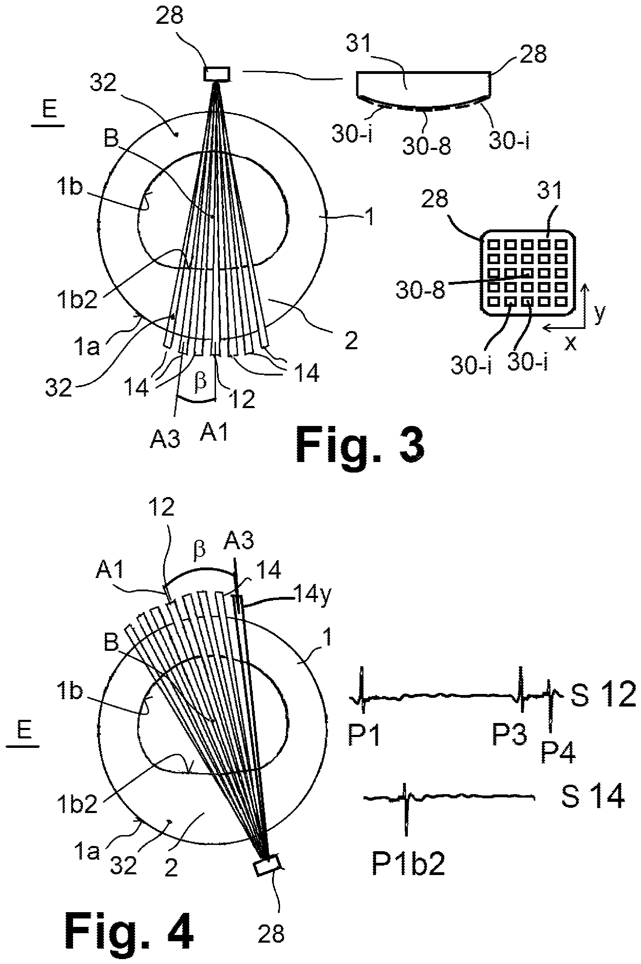

In der in Fig. 4 gezeigten unteren Stellung liegt der THz-Sensor 28 vor dem Sagging-Bereich 2, so dass die deformierte Innenfläche 1b unten nicht senkrecht zur optischen Achse A1 verläuft und daher kein Reflexionspeak zurückgesandt wird. Somit sind in der Signalamplitude S12 wiederum der erste Signalpeak P1, weiterhin auch von dem rückseitigen Wandbereich die Signalpeaks P3 und P4 zu detektieren, es fehlt jedoch der Peak P2 der Innenfläche 1b im Sagging-Bereich 2. Hier kann ein Fehler detektiert werden, aber gegebenenfalls noch nicht erkannt werden, was für ein Fehler vorliegt.

Da eine Deformation der Innenfläche 12 wie z.B. ein Sagging im Allgemeinen eine glatte, d.h. stetig differenzierbare Fläche ausbildet, ist zu erwarten, dass in einer Stellung oder einigen Stellungen in der Detektionsebene E einer der THz-Zusatz-Sensoren 30-i mit seiner dritten optischen Achse A3 bzw. seiner THz-Zusatz-Strahlung 14 eine senkrechte Lage auf der Sagging-Fläche bzw. der Innenfläche 1b erreicht, wie in Fig. 4 bei dem Signal S14 der THz-Zusatz-Strahlung 14 als Peak P1b2 eingezeichnet.

Weiterhin können Fehlstellen 32 gemäß Fig. 1 in der Detektionsebene E und gemäß Fig. 2 auch außerhalb der Detektionsebene E, insbesondere entgegen der Förderrichtung v, durch die THz-Zusatz-Sensoren 30-i erfasst werden. So wird ein ordnungsgemäßes Rohr 1 für die THz-Zusatz-Sensoren 30-i, die aus der Detektionsebene E heraus gerichtet sind, keinen Signalpeak liefern. Sämtliche Signalpeaks P32 können somit Fehlstellen 32 zugeordnet werden, die durch Laufzeitmessung und bei bekanntem Neigungswinkel α der zweiten oder dritten optischen Achse, z.B. nach Fig. 2 der zweiten optischen Achse A2 des betreffenden THz-Zusatz-Sensors 30-i, der in Fig. 2 die THz-Zusatz-Strahlung 14x aussendet, genau lokalisiert werden können.

Auch in der Detektionsebene E können gemäß Fig. 1 Fehlstellen 32 erfasst werden, hier z.B. durch denjenigen THz-Zusatz-Sensor 30-i, der die THz-Zusatz-Strahlung 14y aussendet

Die Fehlstellen 32 können bei isotropem Reflexionsvermögen sukzessive durch mehrere THz-Zusatz-Sensoren 30-i, d.h. mit unterschiedlichem Neigungswinkel α erfasst werden. In der Detektionsebene E, d.h. bei a=0, kann eine Fehlstelle 32 auch durch den THz-Haupt-Sensor 30-8 und/oder THZ-Zusatz-Sensoren 30-i erfasst werden, wie z.B. in Fig. 1 in der Strahlung 14x gezeigt. Ruch die Messungen bei unterschiedlichen Neigungswinkeln a, insbesondere rückwärtig zur Förderrichtung v, kann aber z.B. auch bei anisotropem Reflexionsvermögen, z.B. bei Metallsplittern, eine deutlich erhöhte Wahrscheinlichkeit erreicht werden, die Fehlstelle 32 zumindest in einem Signal zu detektieren. Vorteilhat ist auch, dass Materialbereiche untersucht werden können, bevor sie unter den mittleren THz- Haupt-Sensor 30-8 der Haupt-Detektionsebene E gelangen.

Somit ermöglicht insbesondere die eines zweidimensionalen Arrays 28 mit in beiden Richtungen bzw. Dimensionen konvexer oder divergenter Ausbildung eine Vermessung in der jeweiligen Detektionsebene E senkrecht zur Rohrachse B und entlang der Rohrachse B, d.h. in der Förderrichtung v und entgegen der Förderrichtung v, d.h.in Förderrichtung v rückwärts.

Die Anordnungen der mehreren THz-Sensoren, d.h. eines Haupt-Sensors 8 und eines Zusatz-Sensors 9, und insbesondere der zweidimensionale THz-Sensor-Array 28 mit einem Haupt-Sensor 30-8 und mehreren Zusatz-Sensoren 30-i, kann weiterhin für eine Aktiv-Passiv-Messung herangezogen werden, bei der ein THz-Sensor, z.B. der Haupt-Sensor 30-8 aktiv ist und THz-Strahlung 12 aussendet und die Zusatz-Sensoren 30-i passiv sind und lediglich an dem Prüfobjekt 1 reflektierte THz-Strahlung aufnehmen. Hierbei kann die Funktion des aktiven und passiven Sensors auch durchwechseln.

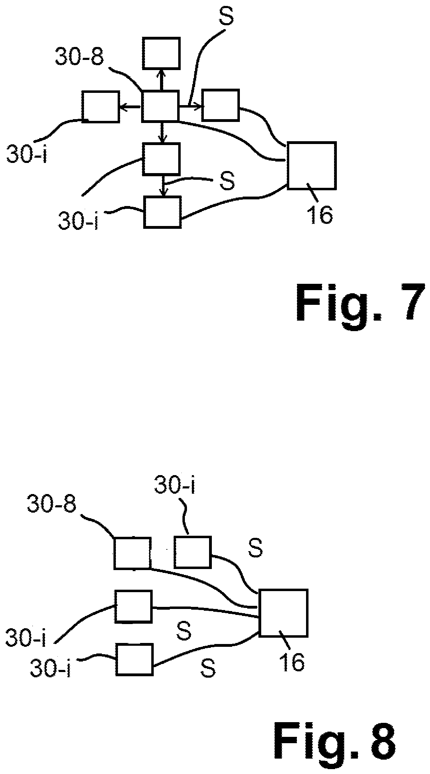

Hierbei nehmen gemäß der schematischen Darstellung der Fig. 7, 8 die passiven Terahertz-Empfangseinheiten, d.h. z.B. die Zusatz-Sensoren 30-i, ein Synchronisierungssignal S auf, das den Sendezeitpunkt der Terahertz-Strahlung der aktiven Einheit, z.B. des Haupt-Sensors 30-8, festlegt.

Vorteilhafterweise ermittelt die Auswerte- und Steuereinrichtung 16 aus der reflektierten; detektierten Terahertz- Strahlung und dem Synchronisationssignal S eine Laufzeit und einen Abstand, insbesondere mittels gespeicherter geometrische Daten oder Abstandsdaten über die Anordnung des THz-Zusatz-Sensors, 30-i und des THz-Haupt-Sensors 30-8, z.B. der Position und Ausrichtung ihrer optischen Achse sowie der Position und Ausrichtung der optischen Achsen. Derartige geometrische Daten können vorab durch Messung, insbesondere aber auch durch eine Kalibrierung an einem ersten Messobjekt festgelegt werden, sodass sie nachfolgend zur Auswertung herangezogen werden können.

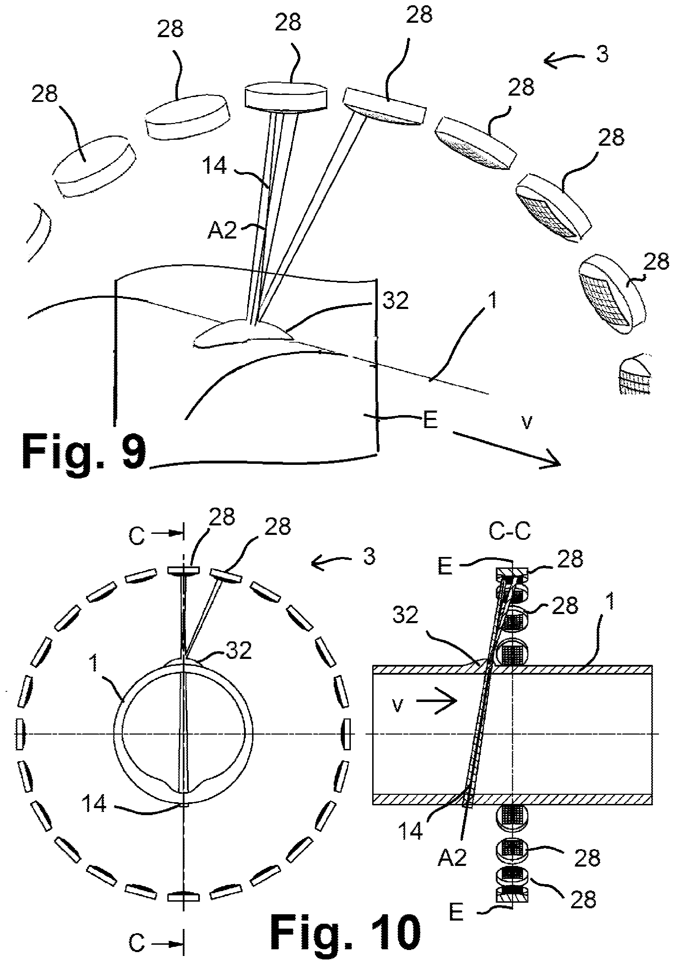

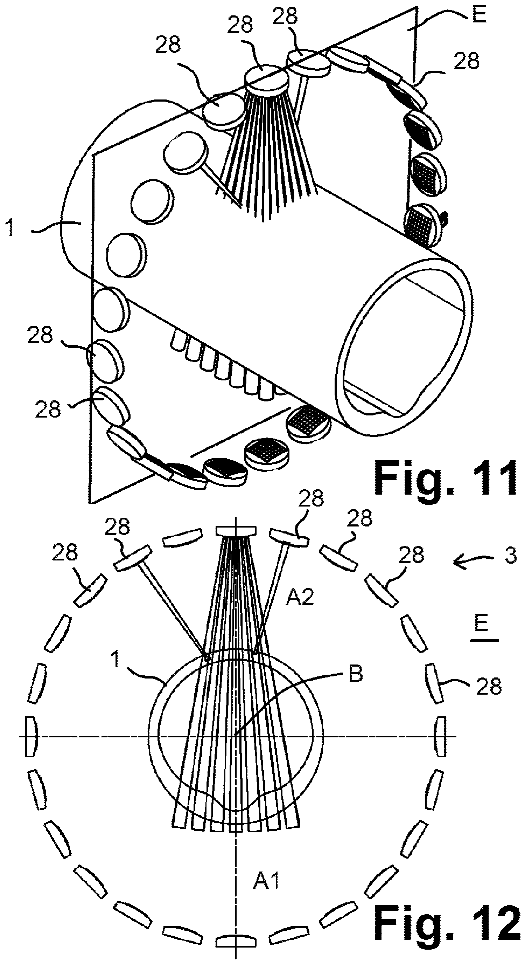

Bei der Ausführungsform der Fig. 9 - 12 ist eine THz-Messvorrichtung 3 vorgesehen, bei der mehrere als hier als THz-Sensor-Arrays 28 ausgebildete Messköpfe um das als Messobjekt zu vermessende Rohr 1 herum angeordnet sind, insbesondere in einer Umfangsrichtung, so dass ihre mittleren THz-Sensoren 30-8 vorzugsweise in der Detektionsebene E liegen. Die THz-Sensor-Arrays 28 sind vorteilhafterweise in Datenverbindung, insbesondere auch mit einer Synchronisation Ihres Aussende-Zeitpunktes der THz-Strahlung. Somit kann eine Fehlstelle 32 außerhalb der Detektionsebene erfasst werden, indem ein Zusatz-Sensor 30-i schräg zur Detektionsebene E, z.B. entgegen der Förderrichtung v aussendet und ein Zusatz-Sensor 30-i eines anderen THz-Sensor-Arrays 28 die an der Fehlstelle 32 reflektierte Strahlung detektiert. Fig. 9 und 10 zeigen zur Veranschaulichung den THz-Zusatzstrahl 14, ohne Darstellung des THz-Hauptstrahls 12, der ergänzend in der Detektionsebene E ausgesandt wird.

Somit ist ein Scannen in der Detektionsebene E möglich, mit der Wanddicken in der Detektionsebene E um das Rohr 1 herum vermessen werden, ohne dass die Messvorrichtung geschwenkt werden muss, und weiterhin können Fehlstellen in der Detektionsebene E, und es können Fehlstellen 32 außerhalb der Detektionsebene E , die z.B. noch in die Detektionsebene E gefördert werden, detektiert werden, wobei eine hohe Wahrscheinlichkeit vorliegt, dass die reflektierte Strahlung von einem der Zusatz-Sensoren 30-i eines der THz-Sensor-Arrays 28 erfasst werden kann.

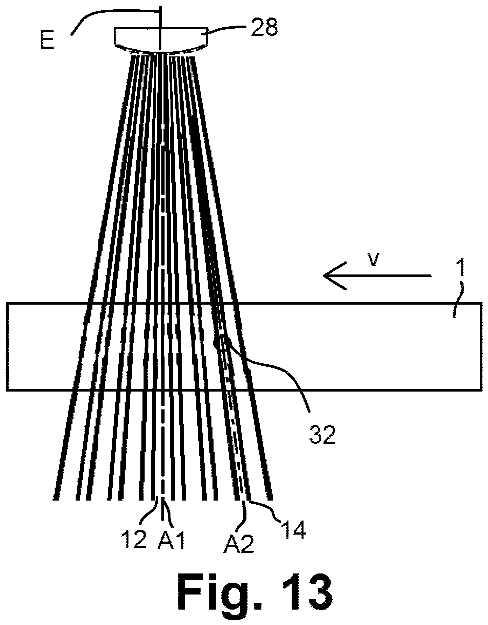

Bei der Ausführungsform der Fig. 13 wird planes Messobjekt 1 vermessen, das wiederum in Förderrichtung v transportiert wird. Auch hier ist wiederum ies als Messvorrichtung ein Messkopf 28 mit Sensoren 30-8 und 30-1 als THz-Sensor-Array vorgesehen, oder auch mehrere Messköpfe 28, wobei entsprechend den vorherigen Ausführungsformen in der Detektionsebene E senkrecht zu der Förderrichtung v durch einen Haupt-Sensor 30-8 eine oder mehrere Schichtdicken des Messobjektes 1 vermessen werden. Durch die weiterhin vorhandenen Zusatz-Sensoren 30-i mit ihren optischen Achsen A2 und auch A3 können somit wiederum Fehlstellen 32 in oder an dem Messobjekt 1 detektiert werden, indem sie Zusatz-Strahlung 14 entlang ihrer optischen Achse A2 oder A3 aussenden und reflektierte Strahlung detektieren. Insbesondere können zweite optischen Achsen A2 zu der Detektionsebene E geneigt verlaufen, so dass Fehlstellen außerhalb der Detektionsebene E detektiert werden können, d.h. auch Fehlstellen 32 in Förderrichtung vor der Detektionsebene E, die nachfolgend in die Detektionsebene E gelangen.

### Bezugszeichenliste

- 1: Rohr
- 1a: Außenfläche
- 1b: Innenfläche
- 1b2: Sagging-Fläche
- 2: Sagging-Bereich
- 3: THz-Messvorrichtung
- 12: THz-Haupt-Strahlung
- 14: THz-Zusatz-Strahlung
- 16: Auswerte- und Steuereinrichtung, separat oder in Messkopf 28 integriert

- 28: Messkopf mit einem Haupt-Sensor und mindestens einem Zusatz-Sensor, z.B. THz-Sensor-Array

- 30-8: mittlerer THz-Sensor, Haupt-Sensor
- 30-i: weitere THz-Sensor, Zusatz-Sensor

- A1: erste optische Achse des Hauptstrahls 12
- A2: zweite optische Achse eines Zusatz-Strahls 14
- A3: dritte optische Achse eines in der Detektionsebene E liegenden Zusatz-Strahls 14
- B: Symmetrieachse, z.B. Rohrachse
- E: Detektionsebene

- α: Neigungswinkel gegenüber Detektionsebene E
- β: Ebenen-Sensorwinkel in der Detektionsebene E

- P1, P2, P3, P4, P32: Reflexionspeaks,
- P1, P2, P3, P4: Haupt-Reflexionspeaks,
- P32: Zusatz-Reflexionspeak

- S: Synchronisationssignal

- S12, S14: Signalamplituden

## Patentansprüche

1. THz-Messvorrichtung (3) zum Messen mindestens einer Schichtdicke (d) eines entlang einer Förderrichtung (v) oder Symmetrieachse (B) geförderten Messobjektes (1), wobei die THz-Messvorrichtung (3) aufweist:
- einen THz-Haupt-Sensor (30-8) zum Aussenden eines THz-Hauptstrahls (12) entlang einer ersten optischen Achse (A1) in einer Detektionsebene (E) senkrecht zu der Förderrichtung (v) oder Symmetrieachse (B) und zum Empfangen von entlang der ersten optischen Achse (A1) reflektierter THz-Strahlung,
- mindestens einen THz-Zusatz-Sensor (30-i) zum Aussenden eines THz-Zusatz-Strahls (14) entlang einer zweiten optischen Achse (A2), zur Detektion des entlang der zweiten optischen Achse (A2) zurück reflektierten THZ-Zusatz-Strahls (14),
- eine Auswerte- und Steuereinrichtung (16), die geeignet ist, = eine erste Signalamplitude (S12) des THz-Haupt-Sensors (30-8) aufzunehmen, , Haupt-Reflexionspeaks (P1, P2, P3, P4) in der ersten Signalamplitude (S12) zu ermitteln und aus den Haupt-Reflexionspeaks (P1, P2, P3, P4) einen Abstand und/oder eine Schichtdicke in der Detektionsebene (E) zu ermitteln, und = eine zweite Signalamplitude (S14) des THz-Zusatz-Sensors (30-i) aufzunehmen, Zusatz-Reflexionspeaks (P32) in der zweiten Signalamplitude (S14) zu ermitteln und die Zusatz-Reflexionspeaks (P32) Fehlstellen (32) in oder auf dem Messobjekt (1) zuzuordnen,
**dadurch gekennzeichnet, dass** die zweite optische Achse (A2) außerhalb der Detektionsebene (E) und/oder zu der Detektionsebene (E) geneigt verläuft,
wobei der THz-Haupt-Sensor (30-8) und der mindestens eine THz-Zusatz-Sensor (30-i) starr zueinander und auf einem gemeinsamen Messkopf (28) angeordnet sind, und
wobei mehrere THz-Zusatzsensoren (30-i) zusammen mit dem THz-Haupt-Sensor (30-8) als THz-Sensor-Array (28) angeordnet sind, wobei ihre optischen Achsen (A1, A2, A3) fest zueinander und divergent auseinanderlaufend angeordnet sind, zur Erfassung von mehreren Materialbereichen des Messobjektes (1).

2. THz-Messvorrichtung (3) nach Anspruch 1, **dadurch gekennzeichnet, dass** die zweite optische Achse (A2) zu der Detektionsebene E) entgegen der Förderrichtung (v) oder Symmetrieachse (B) geneigt verläuft, zur Erfassung von Materialbereichen vor deren Eintritt in die Detektionsebene (E).

3. THz-Messvorrichtung (3) nach Anspruch 1 oder 2, **dadurch gekennzeichnet, dass** die erste und/oder zweite optische Achse (A1, A2) durch die Symmetrieachse (B) der THz-Messvorrichtung (3) verläuft.

4. THz-Messvorrichtung (3) nach einem der vorherigen Ansprüche, **dadurch gekennzeichnet, dass**
mindestens ein THz-Zusatz-Sensor (30-i) eingerichtet ist, um passiv benutzt zu werden und eine von dem THz-Haupt-Sensor (30-8) oder einem anderen THz-Zusatz-Sensor (30-i) ausgesandte und an dem Messobjekt (1) reflektierte THz- Strahlung zu detektieren,
wobei die THz-Messvorrichtung (3) eine Datenverbindung (10) zur Synchronisierung des THz-Zusatz-Sensors (30-i) mit dem THz-Haupt-Sensor (30-8) mittels eines Synchronisationssignals (S) aufweist,
wobei die Auswerte- und Steuereinrichtung (16) 2. geeignet ist, aus der reflektierten; detektierten THz- Strahlung und dem Synchronisationssignal (S) eine Laufzeit und einen Abstand zu ermitteln, insbesondere mittels gespeicherter geometrischer Daten oder Abstandsdaten über die Anordnung des THz-Zusatz-Sensors (30-i) und des THz-Haupt-Sensors (30-8),
wobei die Steuer- und Auswerteeinrichtung (16) geeignet ist, eine Laufzeitmessung im Zeitraum und/oder eine Frequenzmodulation der ausgesandten THz-Strahlung des Haupt-Sensors (30-8) und des mindestens einen Zusatz-sensors (30-i), vorzugsweise im Bereich von 0,01 THz bis 10 THz, durchzuführen und aus den Reflexionspeaks (P1, P2, P3, P4) Abstände zu ermitteln.

5. THz-Messvorrichtung (3) nach einem der vorherigen Ansprüche, **dadurch gekennzeichnet, dass** sie eine von der Steuer- und Auswerteeinrichtung (16) angesteuerte Verstelleinrichtung zum Schwenken des Messkopfs (28) in mehrere Messwinkelpositionen, vorzugsweise vollumfänglich um das Messobjekt (1) und/oder um eine Symmetrieachse herum, aufweist.

6. THz-Messvorrichtung (3) nach einem der vorherigen Ansprüche, **dadurch gekennzeichnet, dass** der THz-Haupt-Sensor (30-8) und der THZ-Zusatz-Sensor (30-i) in Umfangsrichtung nebeneinander und/oder in Förderrichtung (v) und/oder Richtung der Symmetrieachse (B) hintereinander angeordnet sind.

7. THz-Messvorrichtung (3) nach einem der vorherigen Ansprüche,
**dadurch gekennzeichnet, dass** mehrere THz-Zusatzsensoren (30-i) zusammen mit dem THz-Haupt-Sensor (30-8) als THz-Sensor-Array (28) angeordnet sind, wobei ihre optische Achsen (A1, A2, A3) fest zu einander und divergent auseinanderlaufend angeordnet sind, zur Erfassung von mehreren, vorzugsweise beabstandeten Materialbereichen des Messobjektes (1).

8. THz-Messvorrichtung (3) einem der vorherigen Ansprüche, **dadurch gekennzeichnet, dass** das THz-Sensor-Array (28) eine zweidimensionale Anordnung aus THz-Sensoren (30-8, 30-i) ausbildet, z.B. auf einer konvexen und/oder nicht-planen Arrayfläche und/oder mit zueinander gekippten optischen Achsen (A1, A2, A3).

9. THz-Messvorrichtung (3) nach Anspruch 8, **dadurch gekennzeichnet, dass** das THz-Sensor-Array (28) einen mittleren Haupt-Sensor (30-8) und mehrere umgebende Zusatz-Sensoren (30-i) aufweist.

10. THz-Messvorrichtung (3) nach einem der Ansprüche 8 oder 9, **dadurch gekennzeichnet, dass** zumindest ein THz-Zusatz-Sensor (30-i) zum Aussenden eines THz-Zusatz-Strahls (14) entlang einer dritten optischen Achse (A3) vorgesehen ist, die in der Detektionsebene (E) verläuft und gegenüber der ersten optischen Achse (A1) um einen Ebenen-Sensorwinkel (β) in der Detektionsebene (E) verstellt ist, wobei die dritte optische Achse (A3) nicht durch die Symmetrieachse (B) verläuft und zur Detektion des entlang der dritten optischen Achse (A3) zurück reflektierten THZ-Zusatz-Strahls (14) vorgesehen ist,
wobei die Auswerte- und Steuereinrichtung (16) geeignet ist, auch die Signalamplitude des entlang der dritten optischen Achse (A3) ausgerichteten THz-Zusatz-Sensors (30-i) aufzunehmen und Reflexionspeaks in der Signalamplitude als Fehlstellen (32) in der Detektionsebene (E) zu ermitteln.

11. THz-Messvorrichtung (3) nach Anspruch 10, **dadurch gekennzeichnet, dass** die die Steuer- und Auswerteeinrichtung (16) geeignet ist, eine Fehlformung (2) einer Innenfläche (1b), z.B. einen exzentrischen Bereich, Sagging-Bereich oder Ovalitäts-Bereich eines rohrförmigen Messobjektes (1) zu detektieren, wenn sie
- in der ersten Signalamplitude (S12) des Haupt-Sensors (30-8) einen äußeren Reflexionspeak der Außenfläche (1a), aber keinen entsprechenden inneren Reflexionspeak an der Innenfläche (1b) detektiert, und
- in einer Signalamplitude (S14) eines in der Detektionsebene (E) und nicht durch die Symmentrieachse des Messobjektes (1) verlaufenden THz-Zusatz-Strahls (14y) einen weiteren Reflexionspeak (P1b2) ermittelt.

12. THz-Messvorrichtung (3) nach einem der vorherigen Ansprüche, **dadurch gekennzeichnet, dass** mehrere THz-Array-Anordnungen (28) mit jeweils einem Hauptsensor und mehreren Zusatz-Sensoren um eine Symmetrieachse (B) herum, in der Detektionsebene (E), angeordnet sind.

13. THz-Messvorrichtung (3) nach Anspruch 12, **dadurch gekennzeichnet, dass** jeweils der Hauptsensor (30-8) einer THz-Array-Anordnung (28) eingerichtet ist, aktiv zu sein und einen THz-Hauptstrahl (12) auszusenden und die Haupt- und Zusatzsensoren (30-8, 30-i) der anderen THz-Array-Anordnungen (28) eingerichtet sind, passiv zu sein und reflektierte THz-Strahlung zu detektieren.

14. Messanordnung aus einer THz-Messvorrichtung (3) nach einem der vorherigen Ansprüche und dem Messobjekt (1), dessen Schichtdicke von der THz-Messvorrichtung (3) gemessen wird.

15. Messanordnung nach Anspruch 14, das weiterhin eine Fördereinrichtung zum Fördern des Messobjektes (1) in die Förderrichtung (v) aufweist.

16. THz- Messverfahren zum Messen mindestens einer Schichtdicke (d) eines Messobjektes (1), das entlang einer Förderrichtung (v) gefördert wird, wobei das THz-Messverfahren mindestens folgende Schritte aufweist:
- Aussenden eines THz-Hauptstrahls (12) von einem THz-Haupt-Sensor (30-8) entlang einer ersten optischen Achse in einer Detektionsebene (E) senkrecht zu der Förderrichtung (v) auf das Messobjekt (1) und
- Detektieren von entlang der ersten optischen Achse (A1) reflektierter THz-Strahlung als erste Signalamplitude (S12),
- Aussenden mindestens eines THz-Zusatz-Strahls von einem THz-Zusatz-Sensor (30-i) entlang einer zweiten optischen Achse (A2), die außerhalb der Detektionsebene (E) und/oder zu der Detektionsebene (E) geneigt verläuft, auf das Messobjekt (1) und
- Detektieren von entlang der zweiten optischen Achse (A2) zurück reflektierter THZ-Zusatz-Strahls (14) als zweite Signalamplitude (S14),
- Ermitteln von Haupt-Reflexionspeaks (P1, P2, P3, P4) in der ersten Signalamplitude (S12) und Ermitteln eines Abstandes und/oder einer Schichtdicke in der Detektionsebene (E) aus den Haupt-Reflexionspeaks (P1, P2, P3, P4), und
- Ermitteln von Zusatz-Reflexionspeaks (P32) in der zweiten Signalamplitude und Ermitteln von Fehlstellen (32) in oder auf dem Messobjekt (1) aus den Zusatz-Reflexionspeaks (P32),
wobei der THz-Haupt-Sensor (30-8) und der mindestens eine THz-Zusatz-Sensor (30-i) starr zueinander und auf einem gemeinsamen Messkopf (28) angeordnet sind,
wobei mehrere THz-Zusatz-Sensoren (30-i) zusammen mit dem THz-Haupt-Sensor (30-8) als THz-Sensor-Array (28) angeordnet sind, wobei ihre optischen Achsen (A1, A2, A3 fest zueinander und divergent auseinanderlaufend angeordnet sind, so dass sie mehrere Materialbereiche des Messobjekts (1) erfassen.

## Claims

1. THz measuring device (3) for measuring at least one layer thickness (d) of a test object (1) conveyed along a conveying direction (v) or axis of symmetry (B), said THz measuring device (3) comprising:
- a main THz sensor (30-8) for emitting a main THz beam (12) along a first optical axis (A1) in a detection plane (E) perpendicular to the conveying direction (v) or axis of symmetry (B) and for receiving THz radiation reflected along the first optical axis (A1),
- at least one additional THz sensor (30-i) for emitting an additional THz beam (14) along a second optical axis (A2), for detecting the additional THz beam (14) reflected back along the second optical axis (A2),
- an evaluation and control device (16) suitable for
= picking up a first signal amplitude (S12) of the main THz sensor (30-8), determining main reflection peaks (P1, P2, P3, P4) in the first signal amplitude (S12), and, from the main reflection peaks (P1, P2, P3, P4), determining a distance and/or a layer thickness in the detection plane (E), and
= picking up a second signal amplitude (S14) of the additional THz sensors (30-i), determining additional reflection peaks (P32) in the second signal amplitude (S14), and assigning the additional reflection peaks (P32) faults (32) in or on the test object (1),
**characterised in that**
the second optical axis (A2) extends outside the detection plane (E) and/or at an angle to the detection plane (E),
wherein the main THz sensor (30-8) and the at least one additional THz sensor (30-i) are arranged rigidly in relation to one another and on a common measuring head (28), and
where multiple additional THz sensors (30-i) are arranged together with the main THz sensor (30-8) as a THz sensor array (28), their optical axes (A1, A2, A3) being arranged fixed in relation to one another and in a manner divergent widening, for detecting multiple material regions of the test object (1).

2. THz measuring device (3) according to claim 1, **characterised in that** the second optical axis (A2) extends at an angle to the detection plane E) opposite to the conveying direction (v) or axis of symmetry (B), for detecting material regions prior to their entry into the detection plane (E).

3. THz measuring device (3) according to claim 1 or 2, **characterised in that** the first and/or second optical axis (A1, A2) extends through the axis of symmetry (B) of the THz measuring device (3).

4. THz measuring device (3) according to one of the above claims,
**characterised in that**
at least one additional THz sensor (30-i) is adapted to being used passively and to detect a THz radiation emitted from the main THz sensor (30-8) or another additional THz sensor (30-i) and reflected on the test object (1),
the THz measuring device (3) including a data connection (10) for synchronising the additional THz sensor (30-i) with the main THz sensor (30-8) using a synchronisation signal (S),
the evaluation and control device (16) being suitable for determining, from the reflected, detected THz radiation and the synchronisation signal (S), a time of flight and a distance, in particular, using stored geometric data or distance data relating to the arrangement of the additional THz sensor (30-i) and the main THz sensor (30-8),
the evaluation and control device (16) being suitable for carrying out a time of flight measurement in the time domain and/or a frequency modulation of the emitted THz radiation of the main sensor (30-8) and the at least one additional sensor (30-i), preferably on the region of between 0.01 THz and 10 THz, and determining distances from the reflection peaks (P1, P2, P3, P4).

5. THz measuring device (3) according to one of the above claims, **characterised in that** it comprises an adjustment means controlled by the evaluation and control device (16) for pivoting the measuring head (28) into multiple measuring angle positions, preferably across the entire circumference around the test object (1) and/or around an axis of symmetry.

6. THz measuring device (3) according to one of the above claims, **characterised in that** the main THz sensor (30-8) and the additional THZ sensor (30-i) are arranged side by side in the circumferential direction and/or one after another in the conveying direction (v) and/or the direction of the axis of symmetry (B).

7. THz measuring device (3) according to one of the above claims, **characterised in that** multiple additional THz sensors (30-i) are arranged together with the main THz sensor (30-8) as a THz sensor array (28), their optical axes (A1, A2, A3) being arranged fixed in relation to one another and in a manner divergent widening, for detecting multiple, preferably spaced apart, material regions of the test object (1).

8. THz measuring device (3) according to one of the above claims, **characterised in that** the THz sensor array (28) forms a two dimensional arrangement of THz sensors (30-8, 30-i), e.g. on a convex and/or nonplanar array surface and/or with their optical axes being tilted in relating to one another (A1, A2, A3).

9. THz measuring device (3) according to claim 8, **characterised in that** the THz sensor array (28) comprises a middle main sensor (30-8) and multiple surrounding additional sensors (30-i).

10. THz measuring device (3) according to one of the claims 8 or 9, **characterised in that** at least one additional THz sensor (30-i) is provided for emitting an additional THz beam (14) along a third optical axis (A3) which extends in the detection plane (E) and is misaligned in the detection plane (E) in relation to the first optical axis (A1) about a plane sensor angle (β), the third optical axis (A3) not running through the axis of symmetry (B) and being provided to detect the additional THz beam (14) reflected back along the third optical axis (A3),
the evaluation and control device (16) being suitable to pick up also the signal amplitude of the additional THz sensor (30-i) aligned along the third optical axis (A3) and to determine reflection peaks in the signal amplitude as faults (32) in the detection plane (E).

11. THz measuring device (3) according to claim 10, **characterised in that** the evaluation and control device (16) is suitable to detect a deformity (2) of an interior surface (1b), e.g. an eccentric region, sagging region or ovality region of the tubular test object (1), when it
- detects an outer reflection peak of the exterior surface (1a) in the first signal amplitude (S12) of the main sensor (30-8) but no corresponding inner reflection peak at the interior surface (1b), and
- detects a further reflection peak (P1b2) in a signal amplitude (S14) of an additional THz beam (14y) extending in the detection plane (E) and not through the axis of symmetry of the test object (1).

12. THz measuring device (3) according to one of the above claims, **characterised in that** multiple THz array arrangements (28) each having a main sensor and multiple additional sensors are arranged in the detection plane (E) around an axis of symmetry (B).

13. THz measuring device (3) according to claim 12, **characterised in that** each of the main sensors (30-8) of a THz array arrangement (28) is configured to be active and to emit a main THz beam (12), and the main and additional sensors (30-8, 30-i) of the other THz array arrangements (28) are configured to be passive and to detect reflected THz radiation.

14. Measuring arrangement consisting of a THz measuring device (3) according to one of the above claims and the test object (1), the layer thickness of which is measured by the THz measuring device (3).

15. Measuring arrangement according to claim 14, further comprising a conveyor means for conveying the test object (1) in the conveying direction (v).

16. THz measuring method for measuring at least one layer thickness (d) of a test object (1), conveyed along a conveying direction (v),
the THz measuring method including at least the following steps:
- emitting a main THz beam (12) from a main THz sensor (30-8) along a first optical axis in a detection plane (E) perpendicular to the conveying direction (v) towards the test object (1), and
- detecting THz radiation reflected along the first optical axis (A1) as a first signal amplitude (S12),
- emitting at least one additional THz beam from an additional THz sensor (30-i) along a second optical axis (A2), which extends outside the detection plane (E) and/or at an angle to the detection plane (E), towards the test object (1), and
- detecting an additional THZ beam (14) reflected back along the second optical axis (A2) as a second signal amplitude (S14),
- determining main reflection peaks (P1, P2, P3, P4) in the first signal amplitude (S12), and determining a distance and/or a layer thickness in the detection plane (E) from the main reflection peaks (P1, P2, P3, P4), and
- determining additional reflection peaks (P32) in the second signal amplitude, and determining faults (32) in or on the test object (1) from the additional reflection peaks (P32),
the main THz sensor (30-8) and the at least one additional THz sensor (30-i) being arranged rigid in relation to one another and on a common measuring head (28),
wherein multiple additional THz sensors (30-i) are arranged together with the main THz sensor (30-8) as a THz sensor array (28), their optical axes (A1, A2, A3) being arranged fixed in relation to one another and in a divergent widening manner such that they scan multiple material regions of the test object (1).

## Revendications

1. Dispositif de mesure térahertz (3) destiné à mesurer au moins une épaisseur de couche (d) d'un objet à mesurer (1) transporté le long d'un sens de transport (v) ou d'un axe de symétrie (B), le dispositif de mesure térahertz (3) présentant :
- un capteur térahertz principal (30-80) destiné à émettre un faisceau térahertz principal (12) le long d'un premier axe optique (A1) dans un plan de détection (E) perpendiculaire au sens de transport (v) ou à l'axe de symétrie et à recevoir un rayonnement térahertz réfléchi le long du premier axe optique (A1),
- au moins un capteur térahertz complémentaire (30-i) destiné à émettre un faisceau térahertz complémentaire (14) le long d'un deuxième axe optique (A2) pour la détection du faisceau térahertz complémentaire (14) rétroréfléchi le long du deuxième axe optique (A2),
- une unité de commande et d'évaluation (16) qui est adaptée à recevoir une première amplitude de signal (S12) du capteur térahertz principal (30-8),
à déterminer des pics de réflexion principaux (P1, P2, P3, P4) dans la première amplitude de signal (S12) et
à déterminer à partir des pics de réflexion principaux (P1, P2, P3, P4) une distance et/ou une épaisseur de couche dans le plan de détection (E) et
à recevoir une deuxième amplitude de signal (S14) du capteur térahertz complémentaire (30-i),
à déterminer des pics de réflexion complémentaires (P32) dans la deuxième amplitude de signal (S14) et à associer les pics de réflexion complémentaires (P32) à des imperfections (32) dans ou sur l'objet à mesurer (1),
**caractérisé en ce que**
le deuxième axe optique (A2) s'étend à l'extérieur du plan de détection (E) et/ou de manière inclinée vers celui-ci,
le capteur térahertz principal (30-8) et l'au moins un capteur térahertz complémentaire (30-i) étant disposés de manière rigide les uns par rapport aux autres et sur une tête de mesure commune (28), et
plusieurs capteurs térahertz complémentaires (30-i) sont disposés avec le capteur térahertz principal (30-8) sous forme de réseau de capteurs térahertz (28), leurs axes optiques (A1, A2, A3) étant disposés de manière fixe les uns par rapport aux autres et de manière à diverger les uns des autres pour capter plusieurs zones de matériau de l'objet à mesurer (1).

2. Dispositif de mesure térahertz (3) suivant la revendication 1, **caractérisé en ce que** le deuxième axe optique (A2) s'étend par rapport au plan de détection (E) de manière inclinée, à l'encontre du sens de transport (v) ou de l'axe de symétrie (B), pour capter des zones de matériau préalablement à leur entrée dans le plan de détection (E).

3. Dispositif de mesure térahertz (3) suivant la revendication 1 ou 2, **caractérisé en ce que** le premier et/ou le deuxième axe optique (A1, A2) s'étend à travers l'axe de symétrie (B) du dispositif de mesure térahertz (3).

4. Dispositif de mesure térahertz (3) suivant une des revendications précédentes, **caractérisé en ce qu'**au moins un capteur térahertz complémentaire (30-i) est agencé pour être utilisé passivement et pour détecter un rayonnement térahertz réfléchi sur l'objet à mesurer (1) émis par le capteur térahertz principal (30-8) ou un autre capteur térahertz complémentaire (30-i),
le dispositif de mesure térahertz (3) présentant une connexion de données (10) pour la synchronisation du capteur térahertz complémentaire (30-i) et du capteur térahertz principal (30-8) au moyen d'un signal de synchronisation (S),
l'unité d'évaluation et de commande (16) étant adaptée pour déterminer à partir du rayonnement térahertz réfléchi détecté et du signal de synchronisation (S) une durée de propagation et une distance, en particulier au moyen de données géométriques mémorisées ou de données de distance via l'agencement du capteur térahertz complémentaire (30-i) et du capteur térahertz principal (30-B),
l'unité d'évaluation et de commande (16) étant adaptée pour effectuer une mesure de la durée de propagation dans le domaine temporel et/ou une modulation de fréquence du rayonnement térahertz émis par le capteur principal (30-80) et l'au moins un capteur complémentaire (30-i), de préférence dans la plage de 0,01 THz à 10 THz, et de déterminer des distances à partir des pics de réflexion (P1, P2, P3, P4).

5. Dispositif de mesure térahertz (3) suivant une des revendications précédentes, **caractérisé en ce qu'il** présente un dispositif de réglage commandé par le dispositif de commande et d'évaluation (16) pour le pivotement de la tête de mesure (28) dans différentes positions angulaires de mesure, de préférence sur tout le pourtour de l'objet à mesurer (1) et/ou autour d'un axe de symétrie.

6. Dispositif de mesure térahertz (3) suivant une des revendications précédentes, **caractérisé en ce que** le capteur térahertz principal (30-8) et le capteur térahertz complémentaire (30-i) sont disposés l'un à côté de l'autre dans le sens de la circonférence et/ou l'un derrière l'autre dans le sens de transport (v) et/ou dans le sens de l'axe de symétrie (B).

7. Dispositif de mesure térahertz (3) suivant une des revendications précédentes, **caractérisé en ce que** plusieurs capteurs térahertz complémentaires (30-i) sont disposés avec le capteur térahertz principal (30-8) sous forme de réseau de capteurs térahertz (28), leurs axes optiques (A1, A2, A3) étant disposés fixes les uns par rapport aux autres et de manière à diverger pour capter plusieurs zones de matériau, de préférence distancées les unes des autres, de l'objet à mesurer (1).

8. Dispositif de mesure térahertz (3) suivant une des revendications précédentes, **caractérisé en ce que** le réseau de capteurs térahertz (28) forme un agencement bidimensionnel de capteurs térahertz (30-8, 30-i), par exemple sur une surface de réseau convexe et/ou non plane et/ou avec des axes optiques (A1, A2, A3) basculés les uns vers les autres.

9. Dispositif de mesure térahertz (3) suivant une des revendications précédentes, **caractérisé en ce que** le réseau de capteurs térahertz (28) présente un capteur principal central (30-8) entouré de plusieurs capteurs complémentaires (30-i).

10. Dispositif de mesure térahertz (3) suivant une des revendications 8 ou 9, **caractérisé en ce qu'**au moins un capteur térahertz complémentaire (30-i) est prévu pour émettre un faisceau térahertz complémentaire (14) le long d'un troisième axe optique (A3) qui s'étend dans le plan de détection (E) et qui est réglé par rapport au premier axe optique (A1) de manière à former un angle capteur-plan (β) dans le plan de détection (E), le troisième axe optique (A3) ne s'étendant pas à travers l'axe de symétrie (B) et étant prévu pour la détection du faisceau térahertz complémentaire (14) rétroréfléchi le long du troisième axe optique (A3),
l'unité d'évaluation et de commande (16) étant adaptée pour recevoir également l'amplitude de signal du capteur térahertz complémentaire (30-i) orienté le long du troisième axe optique (A3) et pour déterminer des pics de réflexion dans l'amplitude de signal comme imperfections (32) dans le plan de détection (E).

11. Dispositif de mesure térahertz (3) suivant la revendication 10, **caractérisé en ce que** l'unité de commande et d'évaluation (16) est adaptée pour détecter une formation défectueuse (2) d'une surface interne (1b), par exemple une zone excentrique, une zone de fléchissement ou une zone présentant une ovalité d'un objet à mesurer (1) tubulaire, lorsqu'elle détecte dans la première amplitude de signal (S12) du capteur principal (30-i) un pic de réflexion externe de la surface externe (1a), mais aucun pic de réflexion interne correspondante sur la surface interne (1b) et pour déterminer un autre pic de réflexion (P1b2) dans une amplitude de signal (S14) d'un faisceau térahertz complémentaire (14y) s'étendant dans le plan de détection (E) et non pas à travers l'axe de symétrie de l'objet à mesurer (1).

12. Dispositif de mesure térahertz (3) suivant une des revendications précédentes, **caractérisé en ce que** plusieurs agencements en réseau térahertz (28) comportant respectivement un capteur principal et plusieurs capteurs complémentaires autour d'un axe de symétrie (B) sont disposés dans le plan de détection (E).

13. Dispositif de mesure térahertz (3) suivant la revendication 12, **caractérisé en ce que** le capteur principal (30-8) d'un agencement en réseau térahertz (28) est respectivement agencé pour être actif et émettre un faisceau térahertz principal (12) et **en ce que** les capteurs principaux et complémentaires (30-8, 30-i) des autres agencements en réseau térahertz (28) sont agencés pour être passifs et détecter un rayonnement térahertz réfléchi.

14. Agencement de mesure térahertz (3) constitué par un dispositif de mesure térahertz (3) suivant une des revendications précédentes et l'objet à mesurer (1), dont l'épaisseur de couche est mesurée par le dispositif de mesure térahertz (3).

15. Agencement de mesure térahertz suivant la revendication 14 présentant en plus un dispositif de transport pour transporter l'objet à mesurer (1) dans le sens de transport (v).

16. Procédé de mesure térahertz pour mesurer au moins une épaisseur de couche (d) d'un objet à mesurer (1) qui est transporté le long d'un sens de transport (v), le procédé de mesure térahertz présentant au moins les étapes suivantes :
- émission d'un faisceau térahertz principal (12) par un capteur térahertz principal (30-8) le long d'un premier axe optique dans un plan de détection (E) perpendiculaire au sens de transport (v) vers l'objet à mesurer (1) et
- détection d'un rayonnement térahertz réfléchi le long du premier axe optique (A) sous la forme d'une première amplitude de signal (S12),
- émission vers l'objet à mesurer (1) d'au moins un faisceau térahertz complémentaire par un capteur térahertz complémentaire (30-i) le long d'un deuxième axe optique (A2) qui s'étend à l'extérieur du plan de détection (E) et/ou de manière inclinée vers le plan de détection (E) et
- détection d'un faisceau térahertz complémentaire (14) retroréfléchi le long du deuxième axe optique (A2) sous forme d'une deuxième amplitude de signal (S14),
- détermination de pics de réflexion principaux (P1, P2, P3, P4) dans la première amplitude de signal (S12) et détermination d'une distance et/ou d'une épaisseur de couche dans le plan de détection (E) à partir des pics de réflexion principaux (P1, P2, P3, P4), et
- détermination de pics de réflexion complémentaires (P32) dans la deuxième amplitude de signal et détermination d'imperfections (32) dans ou sur l'objet à mesurer (1) à partir des pics de réflexion complémentaires (P32),
le capteur térahertz principal (30-8) et l'au moins un capteur térahertz complémentaire (30-i) étant disposés de manière rigide les uns par rapport aux autres et sur une tête de mesure commune (28),
plusieurs capteurs térahertz complémentaires (30-i) étant disposés avec le capteur térahertz principal (30-8) sous forme de réseau de capteurs térahertz (28), leurs axes optiques (A1, A2, A3) étant disposés de manière fixe les uns par rapport aux autres et de manière à diverger les uns des autres pour capter plusieurs zones de matériau de l'objet à mesurer (1).
